# EUROPÄISCHE PATENTSCHRIFT

(11) **EP 3 084 949 B1**
(45) Veröffentlichungstag und Bekanntmachung des Hinweises auf die Patenterteilung: **27.02.2019**
(21) Anmeldenummer: 14833108.5
(22) Anmeldetag: 18.12.2014
(51) Int. Cl.: H02M 7/493

(54) **VERFAHREN ZUR ANSTEUERUNG PARALLEL GESCHALTETER INVERTER**
METHOD FOR ACTUATING INVERTERS CONNECTED IN PARALLEL
PROCÉDÉ POUR ACTIVER DES ONDULEURS CONNECTÉS EN PARALLÈLE

(30) Priorität: 19.12.2013 AT 9732013
(43) Veröffentlichungstag der Anmeldung: 26.10.2016
(73) Patentinhaber: Schneider Electric Power Drives GmbH, 1210 Wien (AT)
(72) Erfinder: FEHRINGER, Rudolf, A-1230 Wien (AT); LEHNER, Gerhard, A-2151 Asparn an der Zaya (AT)
(74) Vertreter: KLIMENT & HENHAPEL
(86) Internationale Anmeldenummer: PCT/AT2014/050305
(87) Internationale Veröffentlichungsnummer: WO 2015/089537

(56) Entgegenhaltungen:
- EP-A2- 2 595 304
- US-A1- 2004 093 533

## Beschreibung

Die Erfindung bezieht sich auf ein Verfahren zur Ansteuerung der Schaltelemente parallel geschalteter, dreiphasiger Inverterstufen, wobei jedes der sechs Schaltelemente einer Inverterstufe jeweils zwei Schaltzustände aufweist und der Gesamt-Schaltzustand einer Inverterstufe durch eine, als Schaltzustandsbitfolge von sechs Bits darstellbare Kombination der Schaltzustände ihrer Schaltelemente festgelegt ist, und durch Schalten der Schaltelemente mit einer Schaltfrequenz eine zeitliche Abfolge von, aus einer Anzahl erlaubter Gesamt-Schaltzustände ausgewählten Gesamt-Schaltzuständen der Inverterstufe zur Formung eines gewünschten Ausgangsstromes der Inverterstufe verwirklicht wird.

Ein solches Verfahren wurde in der EP 2 595 304 beschrieben. Die US 2004/093533 beschreibt eine Parallelschaltung von sogenannten Point-of-Load (POL)-Konvertern mit zentraler Regelung und serieller Übertragungsstrecke der Ansteuersignale. Dreiphasige Inverterstufen dienen der Formung eines gewünschten Ausgangsstromes durch entsprechendes Schalten der Schaltelemente und finden sich etwa in drehzahlvariablen Antrieben, bei denen zur Formung eines gewünschten Wechselstromes ein Eingangswechselstrom zunächst in Gleichstrom und anschließend durch eine geeignete Schaltabfolge der einzelnen Inverter-Schaltelemente in den gewünschten Wechselstrom umgewandelt wird. Inverterstufen finden sich insbesondere in Umrichter, wobei ein Umrichter in herkömmlicher Weise mit einem Leistungsteil versehen ist, der eine eigene Regeleinheit zur Ansteuerung der Schaltelemente des Umrichters und somit zur Einstellung gewünschter Gesamt-Schaltzustände je nach gewünschtem Ausgangsstrom aufweist. Die Schaltelemente einer Inverterstufe werden somit jeweils von einer eigenen, lokalen Regeleinheit angesteuert, die baulich am betreffenden Umrichter angeordnet ist. Für die Regelung des Ausgangsverhaltens und zum Schutz der Inverterstufe werden zudem Messdaten beispielsweise über Spannungen, Ströme und Temperaturen benötigt, die über Sensoren erfasst und ebenfalls von der lokalen Regeleinheit verarbeitet werden. Verzögerungen zwischen der Regeleinheit und der Ansteuerstufe der Schaltelemente sollen dabei so kurz wie möglich gehalten werden, sodass in herkömmlicher Weise die Regeleinheit in unmittelbarer Nähe zur Leistungsstufe des Inverters platziert wird. Die sechs Ansteuersignale werden dabei parallel über eine Isolationstrennstelle an die Ansteuerstufe weitergegeben und benötigte Messdaten direkt von der Regeleinheit erfasst. Bei den Schaltelementen handelt es sich insbesondere um Halbleiterschaltelemente mit einem Steueranschluss ("Gate"), vorzugsweise IGBTs (insulated-gate bipolar transistor). Typische Schaltfrequenzen solcher Schaltelemente liegen dabei im kHz-Bereich.

Im Hochleistungsbereich müssen hohe Ströme umgeformt werden, die von einzelnen Schaltelementen mitunter nicht mehr geführt werden können. Daher behilft man sich mit einer analogen Parallelschaltung von Umrichtern und der ihnen jeweils zugeordneten Inverterstufe, um die Strombelastung der einzelnen Inverterstufe und somit der einzelnen Schaltelemente zu reduzieren. Hierzu müssen jedoch auch alle Inverterstufen untereinander verbunden werden. Mit jeder zusätzlichen Inverterstufe steigt somit der Verkabelungsaufwand stark an. In der Praxis ist daher die Anzahl parallel geschalteter Inverterstufen stark begrenzt und auf einige wenige Umrichter beschränkt. Des Weiteren werden die Übertragungswege zu einer zentralen Regeleinheit bei zunehmender Anzahl der parallel geschalteten Inverter zunehmend länger, wodurch gemeinsam mit den limitierten Übertragungsraten für die parallel übertragenen Messdaten die Fehleranfälligkeit des Gesamtsystems stark erhöht wird.

Für die Ansteuerung parallel geschalteter Inverterstufen werden daher auch Lichtleiterverbindungen verwendet, die aber wiederum aufgrund ihrer Temperaturempfindlichkeit Nachteile aufweisen. Zudem sind Aufwand und Kosten einer Ansteuerung auf Basis von Lichtleiter vergleichbar zu jenen einer herkömmlichen analogen parallelen Ansteuerung. Ähnliches gilt für Feldbussysteme, die zudem aufgrund ihrer limitierten Übertragungsraten und mitunter hohen Verzögerungszeiten für die Ansteuerung von Schaltelementen einer Inverterstufe nachteilig sind.

Das Ziel der Erfindung besteht somit in einem Verfahren sowie einer Anordnung, mit denen der Ansteuerungs- bzw. Schaltungsaufwand bei parallel geschalteten, dreiphasigen Inverterstufen verringert werden kann, wobei jedoch ein sicherer Betrieb der Inverterstufen über eine Vielzahl an Schaltvorgängen gewährleistet sein muss, damit Schaltelemente durch fehlerhafte Ansteuerung nicht zerstört oder in ihrer Lebensdauer stark eingeschränkt werden. Andererseits muss die Ansteuerung der Schaltelemente der Inverterstufen hinreichend schnell erfolgen und zu lange Totzeiten vermeiden, um die Qualität des von der Inverterstufe geformten Ausgangsstromes nicht zu beeinträchtigen. Die erfindungsgemäße Lösung soll ferner vergleichsweise einfach und kostengünstig zu verwirklichen sein.

Dieses Ziel wird mit den Merkmalen von Anspruch 1 erreicht. Anspruch 1 bezieht sich auf ein Verfahren zur Ansteuerung der Schaltelemente parallel geschalteter, dreiphasiger Inverterstufen, wobei jedes der sechs Schaltelemente einer Inverterstufe jeweils zwei Schaltzustände aufweist und der Gesamt-Schaltzustand einer Inverterstufe durch eine, als Schaltzustandsbitfolge von sechs Bits darstellbare Kombination der Schaltzustände ihrer Schaltelemente festgelegt ist, und durch Schalten der Schaltelemente mit einer Schaltfrequenz eine zeitliche Abfolge von, aus einer Anzahl erlaubter Gesamt-Schaltzustände ausgewählten Gesamt-Schaltzuständen der Inverterstufe zur Formung eines gewünschten Ausgangsstromes der Inverterstufe verwirklicht wird.

Erfindungsgemäß ist hierbei vorgesehen, dass
- die Ansteuerung der Schaltelemente einer Inverterstufe über eine, mit der jeweiligen Inverterstufe über eine serielle Datenübertragungsstrecke verbundene, zentrale Regeleinheit erfolgt,
- wobei die zentrale Regeleinheit jeder Schaltzustandsbitfolge, die einem erlaubten Gesamt-Schaltzustand der Inverterstufen entspricht, eine Sendebitfolge bestehend aus zehn Bits eindeutig zuordnet, wobei sich jede Sendebitfolge, die einem erlaubten Gesamt-Schaltzustand der Inverterstufe zugeordnet ist, von einer anderen Sendebitfolge, die einem anderen erlaubten Gesamt-Schaltzustand der Inverterstufe zugeordnet ist, um zumindest vier Bit unterscheidet,
- und die zentrale Regeleinheit zur Ansteuerung eines ausgewählten Gesamt-Schaltzustandes die ihm zugeordnete Sendebitfolge an die jeweilige Inverterstufe übermittelt, und die übermittelte Sendebitfolge von der Inverterstufe als zumindest eine Empfangsbitfolge empfangen und einer Schaltzustandsbitfolge zugeordnet wird,
- wobei die Sendebitfolge mit einer in Bit pro Sekunde gemessenen Übertragungsrate übertragen wird, deren Verhältnis zu der in Hertz gemessenen Schaltfrequenz der Schaltelemente (3) zumindest 1000 beträgt,
- und eine Änderung des Gesamt-Schaltzustandes einer Inverterstufe nur dann vorgenommen wird, wenn die in der jeweiligen Inverterstufe empfangene Empfangsbitfolge einer Bitfolge aus einer vorgegebenen Bitfolgengruppe entspricht, die aus Sendebitfolgen, die jeweils einem erlaubten Gesamt-Schaltzustand der Inverterstufe zugeordnet sind, und aus Bitfolgen, die sich von diesen Sendebitfolgen höchstens um ein Bit unterscheiden, gebildet wird.

Die Ansteuerung der Schaltelemente aller Inverterstufen erfolgt somit erfindungsgemäß mithilfe einer zwischen seriellen Schnittstellen einer zentralen Regeleinheit und der jeweiligen Inverterstufe vorgenommenen Übermittlung von Sendebitfolgen, die jeweils einem ausgewählten Gesamt-Schaltzustand zugeordnet sind. Unter Gesamt-Schaltzustand werden die Schaltzustände aller Schaltelemente einer Inverterstufe zu einem bestimmten Zeitpunkt verstanden. Eine Verbindung zwischen einzelnen Inverterstufen untereinander ist nicht mehr nötig, da eine synchrone Ansteuerung der Schaltungen mittels serieller Schnittstellen bzw. Datenübertragungsstrecken von der zentralen Regeleinheit aus erfolgt. Für die Umwandlung eines parallelen in einen seriellen Datenstrom und die umgekehrte Umwandlung eines seriellen Datenstroms in einen parallelen, können die zentrale Regeleinheit und/oder die Inverterstufen bekannte datentechnische Einrichtungen umfassen, die etwa als "Serializer" bzw. "Deserializer" bekannt sind.

Aufgrund der seriellen, vorzugsweise bidirektionalen Datenübertragung über elektrische Datenleitungen wird ein strukturell einfacher Aufbau für leistungselektronische Systeme bereitgestellt. Der Verkabelungsaufwand zwischen den Inverterstufen und der zentralen Regeleinheit wird durch das Vorsehen serieller Schnittstellen erheblich reduziert. Allerdings sind weitere erfindungsgemäße Maßnahmen erforderlich, um die für das Schalten der Schaltelemente von Inverterstufen erforderliche Zuverlässigkeit und Geschwindigkeit der Ansteuerung sicher zu stellen und in weiterer Folge die zentrale Regeleinheit für die Schaltelemente aller Inverterstufen baulich bzw. räumlich nicht mehr unbedingt in unmittelbarer Nähe zu den Inverterstufen anordnen zu müssen.

In der zentralen Regeleinheit wird hierfür zunächst jeder Schaltzustandsbitfolge, die einem erlaubten Gesamt-Schaltzustand der Inverterstufen entspricht, eine Sendebitfolge eindeutig zugeordnet. Unter einem erlaubten Gesamt-Schaltzustand wird dabei ein Gesamt-Schaltzustand der Inverterstufe verstanden, der einen störungs- und zerstörungsfreien Betrieb der Inverterstufe ermöglicht. Ein Gesamt-Schaltzustand, bei dem etwa alle Schaltelemente einer Inverterstufe gleichzeitig leitend sind, würde zu einem Brückenkurzschluss führen und wäre ein Beispiel eines unerlaubten Gesamt-Schaltzustandes. Eine dreiphasige Inverterstufe mit sechs Schaltelementen verfügt beispielsweise über 27 erlaubte Gesamt-Schaltzustände, aus denen Gesamt-Schaltzustände zur Formung eines gewünschten Ausgangsstromes ausgewählt werden können. Das zeitabhängige Schalten der Schaltelemente verwirklicht eine zeitliche Abfolge dieser ausgewählten Gesamt-Schaltzustände der Inverterstufe, die einen zeitlich veränderlichen Ausgangsstrom der Inverterstufe festlegen.

Da jedes der Schaltelemente einer Inverterstufe jeweils zwei Schaltzustände aufweist, die mit "0" und "1" bezeichnet werden können, kann der Gesamt-Schaltzustand einer Inverterstufe durch eine, als Schaltzustandsbitfolge darstellbare Kombination der Schaltzustände ihrer Schaltelemente festgelegt werden. Ein Gesamt-Schaltzustand einer dreiphasigen Inverterstufe mit sechs Schaltelementen kann beispielsweise über eine Folge von sechs "0" oder "1" dargestellt werden, die jeweils den Schaltzustand der einzelnen Schaltelemente wiedergeben. Diese Folge von "0" oder "1", die einen Gesamt-Schaltzustand der Inverterstufe kennzeichnet, wird im Folgenden als Schaltzustandsbitfolge bezeichnet.

Es wäre grundsätzlich möglich, zur Ansteuerung der Inverterstufe durch die zentrale Regeleinheit die jeweiligen Schaltzustandsbitfolgen zu übermitteln. Aufgrund von Übertragungsfehlern könnte es in diesem- Fall jedoch passieren, dass Schaltzustandsbitfolgen empfangen werden, die einen anderen als den gewünschten Gesamt-Schaltzustand und im schlimmsten Fall einen unerlaubten Gesamt-Schaltzustand der Inverterstufe bewirken. Um die Sicherheit der Ansteuerung zu erhöhen werden daher erfindungsgemäß die im Folgenden erläuterten Maßnahmen vorgeschlagen.

So wird von der zentralen Regeleinheit nicht die Schaltzustandsbitfolge selbst übertragen, sondern eine ihr eindeutig zugeordnete Sendebitfolge bestehend aus zehn Bits, wobei sich jede Sendebitfolge, die einem erlaubten Gesamt-Schaltzustand der Inverterstufe zugeordnet ist, von einer anderen Sendebitfolge, die einem anderen erlaubten Gesamt-Schaltzustand der Inverterstufe zugeordnet ist, um zumindest vier Bit unterscheidet. Die Anmelderin hat festgestellt, dass sich unter diesen Bedingungen ein Übertragungsprotokoll formulieren lässt, bei dem sich einerseits eine für die Ansteuerung einer dreiphasigen Inverterstufe ausreichende Anzahl an Sendebitfolgen finden lässt, und andererseits die erforderliche Übertragungssicherheit sicher gestellt werden kann, wie im Folgenden noch näher ausgeführt werden wird.

Die zentrale Regeleinheit übermittelt erfindungsgemäß in weiterer Folge zur Ansteuerung eines ausgewählten Gesamt-Schaltzustandes die ihm zugeordnete Sendebitfolge an die jeweilige Inverterstufe, wobei die Sendebitfolge mit einer in Bit pro Sekunde gemessenen Übertragungsrate übertragen wird, deren Verhältnis zu der in Hertz gemessenen Schaltfrequenz der Schaltelemente zumindest 1000 beträgt. Somit erfolgen relativ zu den theoretisch übermittelbaren Schaltereignissen pro Zeiteinheit tatsächlich nur wenige Übermittlungen von Schaltereignissen pro Zeiteinheit, södass eine Reihe von Maßnahmen ergriffen werden können, um die Zuverlässigkeit der Ansteuerung der Schaltelemente zu erhöhen, wie noch näher erläutert werden wird. Des Weiteren liegen die Arbeitsfrequenzen der Übertragung oberhalb der leistungselektronischen Störspektren der Inverterstufen, sodass auch aus diesem Grund eine höhere Übertragungssicherheit der kritischen Ansteuersignale erreicht werden kann.

Die Sendebitfolge wird in weiterer Folge von der Inverterstufe als Empfangsbitfolge empfangen. Falls die Sendebitfolge korrekt übertragen wurde, ist sie identisch zur Empfangsbitfolge. Aufgrund von Übertragungsfehlern kann es aber auch vorkommen, dass eine Sendebitfolge fehlerhaft in der jeweiligen Inverterstufe ankommt, sodass sich die Empfangsbitfolge von der Sendebitfolge unterscheidet. Die tatsächlich von der Inverterstufe empfangene Empfangsbitfolge kann sich dabei von der entsprechenden Sendebitfolge je nach Art und Ausmaß des Übertragungsfehlers um ein Bit oder auch mehrere Bits unterscheiden. Im Interesse einer sicheren Ansteuerung der Inverterstufe könnten nun ausschließlich jene Empfangsbitfolgen herangezogen werden, die einer Sendebitfolge entsprechen und somit korrekt übertragen wurden. Die Anmelderin hat jedoch festgestellt, dass sich eine solche Vorgangsweise für das Schalten von Schaltelementen einer Inverterstufe nicht eignet, da die Verzögerungszeiten zu hoch wären.

Daher wird erfindungsgemäß vorgeschlagen, dass eine Änderung des Gesamt-Schaltzustandes nur dann erfolgt, wenn die in der jeweiligen Inverterstufe empfangene Empfangsbitfolge einer Bitfolge aus einer vorgegebenen Bitfolgengruppe entspricht, die aus Sendebitfolgen, die jeweils einem erlaubten Gesamt-Schaltzustand der Inverterstufe eindeutig zugeordnet sind, und aus Bitfolgen, die sich von diesen Sendebitfolgen höchstens um ein Bit unterscheiden, gebildet wird. Diese vorgegebene Bitfolgengruppe stellt somit eine Kontrolle dar, dass keine zu fehlerhafte Empfangsbitfolge ein Schalten der Schaltelemente bewirkt und somit fehlerhafte Gesamt-Schaltzustände der Inverterstufe gesetzt werden. Nur jene Bitfolgen, die einer Bitfolge der vorgegebenen Bitfolgengruppe entsprechen, sind "erlaubte" Bitfolgen, also Bitfolgen, die seitens der Inverterstufe als korrekt bzw. ausreichend korrekt interpretiert werden und folglich eine entsprechende Änderung des Gesamt-Schaltzustandes veranlassen. Dadurch können Fehl-Schaltungen zuverlässig vermieden werden, wodurch sich die Lebensdauer der Schaltelemente und somit der Inverterstufe erheblich verlängert. Andererseits bewirken die meisten Übertragungsfehler eine Änderung der Sendebitfolge in bloß einem Bit, sodass es die Ansteuergeschwindigkeit stark erhöht, wenn ein Großteil dieser fehlerhaften Sendebitfolgen toleriert wird und übermäßige Totzeiten dadurch vermieden werden. Die zusätzlichen Bitfolgen der vorgegebenen Bitfolgengruppe werden in weiterer Folge auch als Toleranzbitfolgen bezeichnet. Aufgrund der vorgenannten Distanz von zumindest vier Bit kann die gewünschte Schaltzustandsbitfolge dennoch mit ausreichender Genauigkeit identifiziert werden. Bisherige Versuche der Anmelderin haben jedenfalls ergeben, dass sich mit dem erfindungsgemäß vorgesehenen Übertragungsprotokoll die für die Ansteuerung einer Inverterstufe erforderlichen Geschwindigkeiten bei annehmbarer Genauigkeit der Ansteuerung erzielen lassen.

Eine bevorzugte Ausführung zeichnet sich dadurch aus, dass die Übertragungsrate der Sendebitfolgen zumindest 600 MB/s beträgt. Dieser Bereich der Übertragungsraten hat sich für die Ansteuerung dreiphasiger Inverterstufen als besonders vorteilhaft erwiesen.

Vorzugsweise weisen die Sendebitfolgen gleich viele Nullen wie Einser auf. Sie sind daher "gleichstromfrei" und bereiten bei der Verwendung von Hochpassfilter und dergleichen keine Schwierigkeiten.

Eine bevorzugte Ausführung zeichnet sich ferner dadurch aus, dass die zentrale Regeleinheit zur Ansteuerung eines ausgewählten Gesamt-Schaltzustandes die ihm zugeordnete Sendebitfolge zweifach aufeinanderfolgend an die jeweilige Inverterstufe übermittelt, und eine Änderung des Gesamt-Schaltzustandes nur dann vorgenommen wird, wenn von der jeweiligen Inverterstufe zwei Empfangsbitfolgen, die demselben ausgewählten Gesamt-Schaltzustand zugeordnet sind, empfangen werden. Eine solche Vorgangsweise verbessert die Übertragungssicherheit, ohne die Verzögerungszeiten der Ansteuerung wesentlich zu erhöhen. Von einer korrekten Übermittlung kann in diesem Fall immer dann ausgegangen werden, wenn die beiden Empfangsbitfolgen identisch sind und nur in diesem Fall erfolgt auch eine Änderung des Schaltzustandes der Inverterstufe.

Eine bevorzugte Ausführung zeichnet sich des Weiteren dadurch aus, dass die zentrale Regeleinheit vor und nach der Übertragung von Sendebitfolgen zumindest eine Start-, Synchronisations- und/oder Stop-Bitfolge überträgt, wobei sich die Start-, Synchronisations- und/oder Stop-Bitfolge von den Sendebitfolgen um zumindest vier Bit und von einer beliebigen Aneinanderreihung zweier aufeinander folgender Sendebitfolgen um zumindest ein Bit unterscheidet. Auf diese Weise wird ein sicheres Signal ("Sync") für den Beginn oder das Ende einer Sende- bzw. Empfangsbitfolge bereitgestellt, wodurch die Übertragungssicherheit erhöht und eine eindeutige Interpretation durch die Inverterstufe gewährleistet ist. Da die Übertragungsrate um ein Vielfaches höher sein wird als die Schaltfrequenz, erfolgen allerdings im Vergleich zu den theoretisch übermittelbaren Schaltereignissen tatsächlich nur wenige Übermittlungen von Schaltereignissen. Zwischen diesen Übermittlungen von Schaltereignissen könnten Übertragungspausen eingehalten werden, sodass die Start-, Synchronisations- und/oder Stop-Bitfolge den Beginn oder das Ende einer Sende- bzw. Empfangsbitfolge anzeigt. Vorzugsweise werden jedoch keine Übertragungspausen eingehalten, sondern es wird zwischen der Übermittlung von Schaltereignissen stets eine wiederholte Folge der Start-, Synchronisations- und/oder Stop-Bitfolge übertragen, um die empfangenden Inverterstufen zu synchronisieren. Die Start-, Synchronisations- und/oder Stop-Bitfolge erfüllt in diesem Fall hauptsächlich die Funktion einer Synchronisations-Bitfolge, da in diesem Fall weniger von einer Start- oder Stop-Bitfolge gesprochen werden kann.

Vorzugsweise ist die serielle Übertragungsstrecke eine bidirektionale Übertragungsstrecke. Dadurch wird einerseits ermöglicht, dass von der Inverterstufe eine Anforderung zur erneuten Übermittlung einer Sendebitfolge an die zentrale Regeleinheit erfolgen kann, falls eine zuvor von der jeweiligen Inverterstufe empfangene Empfangsbitfolge keiner Bitfolge aus der vorgegebenen Bitfolgengruppe entspricht. Andererseits können aber auch Messdaten und dergleichen von der Inverterstufe an die zentrale Regeleinheit übertragen werden.

Im Folgenden werden bevorzugte Ausführungsformen der Erfindung anhand der beiliegenden Zeichnungen näher beschrieben. Hierbei zeigen
Fig. 1 eine schematische Darstellung einer erfindungsgemäßen Anordnung aus mehreren parallel geschalteten Inverterstufen,
Fig. 2 eine schematische Darstellung einer Inverterstufe,
Fig. 3 ein Beispiel einer Schaltzustandsbitfolge und einer ihr zugeordneten Sendebitfolge mit der für sie vorgegebenen Bitfolgengruppe,
Fig. 4 Beispiele für Schaltzustandsbitfolgen und ihnen zugeordnete Sendebitfolgen, die sich um zumindest 4 Bits unterscheiden, und die
Fig. 5 eine Gegenüberstellung eines ,Streams' von Sendebitfolgen mit einem ,Stream' von Empfangsbitfolgen.

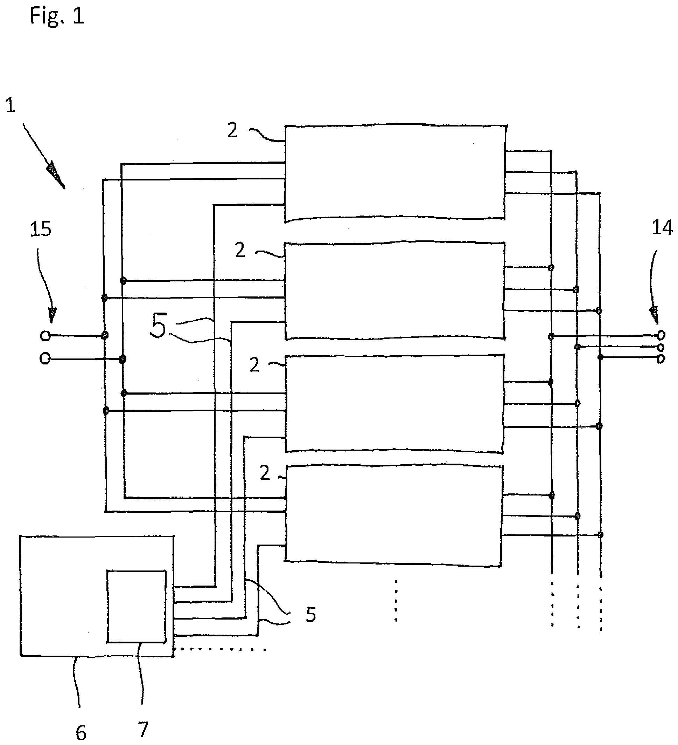

Fig. 1 zeigt eine Anordnung 1 aus mehreren, parallel geschalteten Inverterstufen 2, die einen gemeinsamen, dreiphasigen Ausgang 14 besitzen. An diesem Ausgang 14 stellt die Anordnung 1 einen gewünschten Ausgangstrom bereit. In der dargestellten Ausführungsform ist auch ein gemeinsamer Eingang 15 der Inverterstufen 2 gezeigt, der im Betrieb mit einer Eingangsspannung beaufschlagt ist.

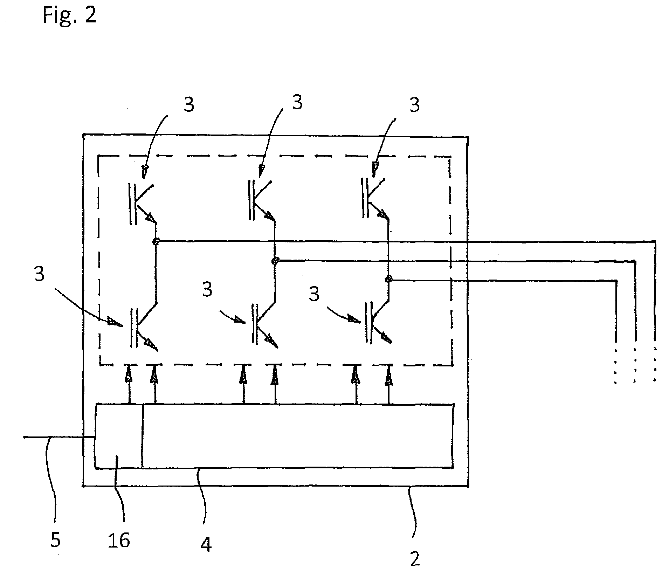

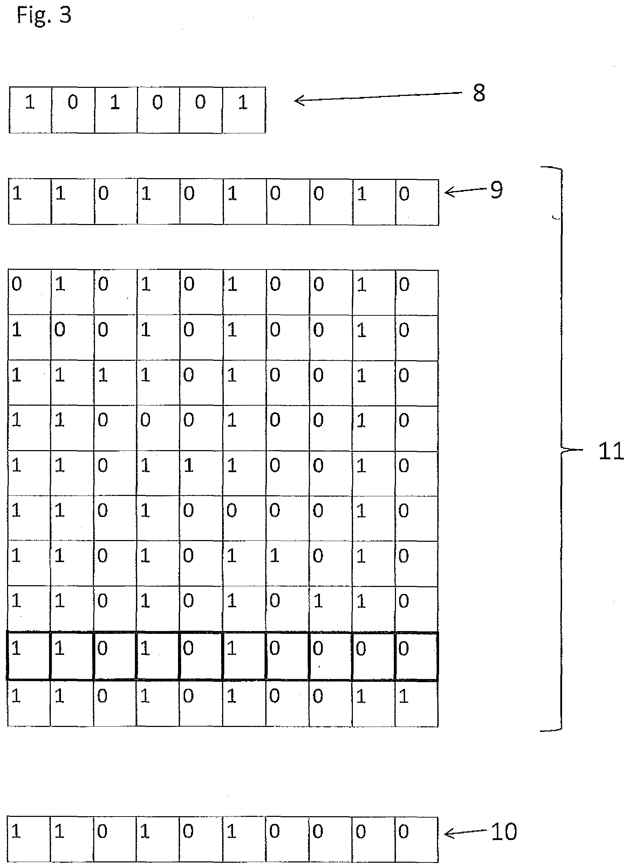

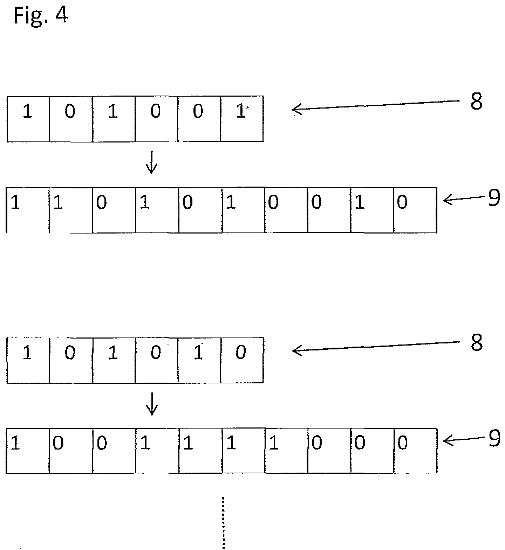

Jede Inverterstufe 2 umfasst sechs Schaltelemente 3 (Fig. 2) mit jeweils zwei Schaltzuständen, wodurch eine theoretische Anzahl an Gesamt-Schaltzuständen einer Inverterstufe 2 durch sämtliche Kombinationsmöglichkeiten gegeben ist. Bei sechs Schaltelementen 3 - wie in der Ausführung gemäß Fig. 2 ersichtlich - ergeben sich 64 theoretisch mögliche Gesamt-Schaltzustände. Diese reduzieren sich auf 27 erlaubte Gesamt-Schaltzustände, da es auch unzulässige Schaltzustände gibt, die einen Kurzschluss verursachen würden. Die Gesamt-Schaltzustände einer Inverterstufe 2 sind jeweils durch eine Schaltzustandsbitfolge 8 bestehend aus sechs Bits darstellbar (Fig. 3 und 4). Eine Schaltzustandsbitfolge 8, die einem erlaubten Gesamt-Schaltzustand entspricht, wäre z.B.: 101001, die einem Gesamt-Schaltzustand der Inverterstufe 2 entspricht, bei der in Bezug auf Fig. 2 das Schaltelement 3 oben links geschlossen ist (1), das Schaltelement 3 unten links offen ist (0), das Schaltelement 3 oben mittig geschlossen ist (1), das Schaltelement 3 unten mittig offen ist (0), das Schaltelement 3 oben rechts offen ist (0), und das Schaltelement 3 unten rechts geschlossen ist (1).

Die Anordnung 1 weist zur Ansteuerung der Schaltelemente 3 aller Inverterstufen 2 eine zentrale Regeleinheit 6 auf, die mit jeder Inverterstufe 2 über eine digitale, serielle Datenübertragungsstrecke 5 zum Austausch elektrischer Signale verbunden ist. Bei der Datenübertragungsstrecke 5 handelt es sich vorzugsweise um eine bidirektionale Datenübertragungsstrecke 5, die in der praktischen Ausführung etwa durch ein Paar differentieller Kabel zur differentiellen bzw. pseudo-differentiellen Signalübertragung gebildet wird, wobei vorzugsweise für jede Übertragungsrichtung ein Paar differentieller Kabel vorgesehen ist.

In der zentralen Regeleinheit 6 ist jedem erlaubten Gesamt-Schaltzustand eine Sendebitfolge 9 eindeutig zugeordnet (Fig. 4). Ist ein gewünschter Gesamt-Schaltzustand einer Inverterstufe 2 zu veranlassen, so wird in einer ersten Zuordnungseinrichtung 7 der zentralen Regeleinheit 6 der entsprechenden Schaltzustandsbitfolge 8 eine Sendebitfolge 9 eindeutig zugeordnet. Diese Zuordnung kann etwa über einen Kodierer erfolgen, oder es werden einfachere Komponenten verwendet und entsprechend konfiguriert, wie sie etwa im PCS-Block eines FPGA bereitgestellt werden. Wie aus der Fig. 3 ersichtlich ist, umfassen die Schaltzustandsbitfolgen 8 bei sechs Schaltelementen 3 insgesamt sechs Bits, die Sendebitfolgen 9 erfindungsgemäß jedoch jeweils zehn Bits. Die Zuordnung zwischen den Schaltzustandsbitfolgen 8 (bzw. den erlaubten Gesamt-Schaltzuständen) und den Sendebitfolgen 9 erfolgt derart, dass sich jede Sendebitfolge 9, die einem Gesamt-Schaltzustand entspricht, von jeder anderen Sendebitfolge 9, die einem anderen Gesamt-Schaltzustand entspricht, erfindungsgemäß um vier Bits unterscheidet. Um einen Gleichstromanteil bei der Übertragung möglichst zu minimieren, weisen die Sendebitfolgen 9 ferner vorzugsweise gleich viele Nullen wie Einser auf (Fig. 4).

Die zentrale Regeleinheit 6 ist des Weiteren ausgebildet, um jeweils über die seriellen Datenübertragungsstrecken 5 Sendebitfolgen 9 an die jeweiligen Inverterstufen 2 zu übermitteln. Die Sendebitfolgen 9 werden als Empfangsbitfolgen 10 von den jeweiligen Inverterstufen 2 empfangen und dort decodiert (Fig. 3). Die Empfangsbitfolgen 10 können sich jedoch aufgrund von Übertragungsfehlern von den ursprünglichen Sendebitfolgen 9 unterscheiden, wie in der Empfangsbitfolge 10 gemäß Fig. 3 etwa an der vorletzten Stelle der Bitfolge zu sehen ist. Es muss somit festgelegt werden, wie mit solchen Übertragungsfehlern zu verfahren ist.

Im Interesse einer sicheren Ansteuerung der Inverterstufe könnten etwa ausschließlich jene Empfangsbitfolgen 10 akzeptiert werden, die einer der 27 möglichen Sendebitfolgen 9 entsprechen und somit offenbar korrekt übertragen wurden. Die Empfangsbitfolge 10 der Fig. 3 würde somit nicht akzeptiert werden, da sie weder der in Fig. 3 dargestellten Sendebitfolge 9 entspricht, und auch keiner anderen Sendebitfolge 9, da sich die Sendebitfolgen 9 erfindungsgemäß um zumindest vier Bit unterscheiden. Da in einem solchen Fall erfindungsgemäß keine Änderung des Gesamt-Schaltzustandes der Inverterstufe 2 vorgenommen wird, muss die Übertragung wiederholt werden, um den ausgewählten Gesamt-Schaltzustand der Inverterstufe 2 doch noch zu verwirklichen. Die Anmelderin hat jedoch festgestellt, dass sich eine solche Vorgangsweise für die praktischen Anforderungen beim Schalten von Schaltelementen 3 einer Inverterstufe 2 nicht mehr eignet, da die Verzögerungszeiten zu hoch werden und eine serielle Ansteuerung der Schaltelemente 3 nicht mehr akzeptabel gelingt.

Erfindungsgemäß ist daher vorgesehen, dass eine Änderung des Gesamt-Schaltzustandes auch dann erfolgt, wenn die in der jeweiligen Inverterstufe 2 empfangene Empfangsbitfolge 10 einer Bitfolge aus einer vorgegebenen Bitfolgengruppe 11 entspricht, die aus Sendebitfolgen 9, die jeweils einem erlaubten Gesamt-Schaltzustand der Inverterstufe 2 eindeutig zugeordnet sind, und aus Bitfolgen, die sich von diesen Sendebitfolgen 9 höchstens um ein Bit unterscheiden, gebildet wird. Im Beispiel der Fig. 3 zeigt sich etwa, dass die Empfangsbitfolge 10 zwar der dargestellten Sendebitfolge 9 nicht entspricht, aber sehr wohl einer Bitfolge einer vorgegebenen Bitfolgengruppe 11, die in der Fig. 3 stark umrandet wurde. Erfindungsgemäß wird diese Empfangsbitfolge 10 somit sehr wohl akzeptiert und der in Fig. 3 gezeigten Sendebitfolge 9 zugeordnet. Diese Zuordnung wird von einer bei der jeweiligen Inverterstufe 2 angeordneten, zweiten Zuordnungseinrichtung 16 vorgenommen. In weiterer Folge wird eine Änderung des Gesamt-Schaltzustandes der Inverterstufe 2 von der Ansteuereinrichtung 4 veranlasst.

Die für jede Sendebitfolge 9 definierte und vorgegebene Bitfolgengruppe 11 stellt einerseits eine Kontrolle dar, dass fehlerhafte Empfangsbitfolgen 10 kein Schalten der Schaltelemente 3 bewirken, definiert aber andererseits auch ein tolerierbares Ausmaß an Übertragungsfehlern, wodurch die Schaltgeschwindigkeit der Schaltelemente 3 erhöht wird. Der Vergleich zwischen den Empfangsbitfolgen 10 und den Bitfolgengruppen 11 wird in der Inverterstufe 2 von einer zweiten Zuordnungseinrichtung 16 vorgenommen, die der Ansteuerstufe 4 für die Schaltelemente 3 vorgeschaltet ist (siehe Fig. 2).

Die Sendebitfolge 9 wird mit einer in Bit pro Sekunde gemessenen Übertragungsrate übertragen, die um ein Vielfaches höher als die Schaltfrequenz der Schaltelemente 3 der Inverterstufen 2 ist, vorzugsweise mit zumindest 600 MB/s. Des Weiteren ist es vorteilhaft, wenn nur dann eine Datenübertragung erfolgt, wenn auch tatsächlich eine Änderung des Gesamt-Schaltzustandes der Inverterstufe 2 gewünscht ist, um die Möglichkeit von Störungen auf sehr kurze Zeitfenster zu reduzieren. Unter Berücksichtigung der erfindungsgemäßen Maßnahme, dass die Übertragungsrate um ein Vielfaches höher als die Schaltfrequenz ist, erfolgen somit relativ zu den theoretisch übermittelbaren Schaltereignissen tatsächlich nur wenige Übermittlungen von Schaltereignissen. Der Schaltzeitpunkt ist dabei weniger kritisch als der ausgewählte Schaltzustand, da am Ausgang der Inverterstufen 2 zumeist ohnehin Lasten mit induktiven Eigenschaften angeordnet sind.

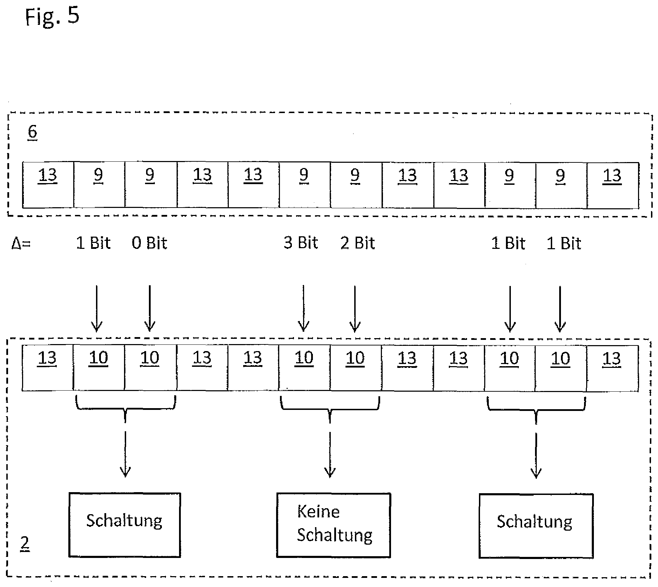

Zur Erhöhung der Zuverlässigkeit der Ansteuerung werden hinsichtlich der Datenübertragung weitere Maßnahmen ergriffen, wie anhand der Fig. 5 erläutert wird. In der Fig. 5 wird insbesondere ein von der zentralen Regeleinheit 6 generierter Strom von Sendebitfolgen 9 einem von einer Inverterstufe 2 empfangenen Strom von Empfangsbitfolgen 10 gegenübergestellt. In der Fig. 5 sind die Sendebitfolgen 9 dabei mit jeweils derselben Referenznummer versehen, es versteht sich jedoch von selbst, dass die Sendebitfolgen 9 jeweils für unterschiedliche Gesamt-Schaltzustände einer Inverterstufe 2 kodieren können. Im Datenstrom der Sendebitfolgen 9 sind ferner Start-, Synchronisations- und/oder Stop-Bitfolgen 13 vorgesehen, die der Inverterstufe 2 den Beginn einer Übertragung von Sendebitfolgen 9 signalisiert, das Ende einer Übertragung von Sendebitfolgen 9, sowie Beginn und Ende einer einzelnen Sendebitfolge 9. Die Start-, Synchronisations- und/oder Stop-Bitfolge 13 unterscheidet sich von den Sendebitfolgen 9 um zumindest vier Bits, sowie vorzugsweise von einer beliebigen Aneinanderreihung zweier aufeinander folgender Sendebitfolgen 9 um zumindest ein Bit. Sofern keine Sendebitfolgen 9 übertragen werden, kann vorzugsweise ein Strom an Start-, Synchronisations- und/oder Stop-Bitfolgen 13 übertragen werden, um eine permanente Synchronisierung der Inverterstufen 2 zu ermöglichen.

Es könnte jedoch vorkommen, dass die Start-, Synchronisations- und/oder Stop-Bitfolge 13 durch Übertragungsfehler in eine unerwünschte Sendebitfolge 9 umgewandelt wird, sodass ein ungewolltes Schaltkommando an die Inverterstufe 2 gesetzt wird. Wie in der Fig. 5 ersichtlich ist, wird daher für eine Änderung des Gesamt-Schaltzustandes einer Inverterstufe 2 die betreffende Sendebitfolge 9 zweimal hintereinander gesendet. Die beiden identischen Sendebitfolgen 9 werden von der betreffenden Inverterstufe 2 als zwei Empfangsbitfolgen 10 empfangen, die nun identisch sein können, oder sich aufgrund von Übertragungsfehlern auch unterscheiden können. Vorzugsweise erfolgt eine Änderung des Gesamt-Schaltzustandes nur dann, wenn die beiden Empfangsbitfolgen 10 identisch sind, oder jeweils einer Bitfolge derselben Bitfolgegruppe 11 entsprechen.

Die in Fig. 5 eingezeichnete Differenz Δ gibt die Anzahl jener Bits an, um die sich eine Empfangsbitfolge 10 von der ursprünglichen Sendebitfolge 9 unterscheidet. Die Übertragung der in der Fig. 5 linken bzw. ersten Empfangsbitfolge 10 führt zu einer Änderung des Gesamt-Schaltzustandes der Inverterstufe 2, da ein Unterschied von einem Bit toleriert wird (siehe Fig. 3). Die Übertragung der in der Fig. 5 mittleren bzw. nachfolgenden Empfangsbitfolge 10 führt zu keiner Änderung des Gesamt-Schaltzustandes der Inverterstufe 2, da Unterschiede von drei bzw. zwei Bits von der zweiten Zuordnungseinrichtung 16 nicht mehr toleriert werden. In diesem Fall erfolgt von der Inverterstufe 2 eine Anforderung ("error flag") zur erneuten Übermittlung einer Sendebitfolge 9 an die zentrale Regeleinheit 6. Dabei ist zu berücksichtigen, dass die Übertragungsrate erfindungsgemäß um ein Vielfaches höher als die Schaltfrequenz der Schaltelemente 3 ist, sodass für die Übersendung der Aufforderung ("error flag") und die erneute Übertragung einer Sendebitfolge 9 bis zur Übermittlung der nächsten Sendebitfolge 9 ausreichend Zeit verbleibt. Die Übertragung der in der Fig. 5 rechten bzw. letzten Empfangsbitfolge 10 führt wiederum zu einer Änderung des Gesamt-Schaltzustandes der Inverterstufe 2, da Unterschiede von jeweils einem Bit toleriert werden.

Mithilfe der Erfindung wird ein Verfahren bereit gestellt, mit dem der Ansteuerungs- bzw. Schaltungsaufwand bei parallel geschalteten, dreiphasigen Inverterstufen 2 verringert werden kann, wobei jedoch ein sicherer Betrieb der Inverterstufen 2 über eine Vielzahl an Schaltvorgängen gewährleistet ist und funktionelle Beeinträchtigungen der Schaltelemente 3 durch fehlerhafte Ansteuerung zuverlässig vermieden werden. Des Weiteren erfolgt die Ansteuerung der Schaltelemente 3 der Inverterstufen 2 hinreichend schnell, um die Qualität des von der Inverterstufe 2 geformten Ausgangsstromes nicht zu beeinträchtigen. Die erfindungsgemäße Lösung ist dabei hinsichtlich der benötigten Hardware vergleichsweise einfach und kostengünstig zu verwirklichen.

## Patentansprüche

1. Verfahren zur Ansteuerung der Schaltelemente (3) parallel geschalteter, dreiphasiger Inverterstufen (2), wobei jedes der sechs Schaltelemente (3) einer Inverterstufe (2) jeweils zwei Schaltzustände (0,1) aufweist und der Gesamt-Schaltzustand einer Inverterstufe (2) durch eine, als Schaltzustandsbitfolge (8) von sechs Bits darstellbare Kombination der Schaltzustände (0,1) ihrer Schaltelemente (3) festgelegt ist, und durch Schalten der Schaltelemente (3) mit einer Schaltfrequenz eine zeitliche Abfolge von, aus einer Anzahl erlaubter Gesamt-Schaltzustände ausgewählten Gesamt-Schaltzuständen der Inverterstufe (2) zur Formung eines gewünschten Ausgangsstromes der Inverterstufe (2) verwirklicht wird, wobei
- die Ansteuerung der Schaltelemente (3) einer Inverterstufe (2) über eine, mit der jeweiligen Inverterstufe (2) über eine serielle Datenübertragungsstrecke (5) verbundene, zentrale Regeleinheit (6) erfolgt,
- wobei die zentrale Regeleinheit (6) jeder Schaltzustandsbitfolge (8), die einem erlaubten Gesamt-Schaltzustand der Inverterstufen (2) entspricht, eine Sendebitfolge (9) bestehend aus zehn Bits eindeutig zuordnet, wobei sich jede Sendebitfolge (9), die einem erlaubten Gesamt-Schaltzustand der Inverterstufe (2) zugeordnet ist, von einer anderen Sendebitfolge (9), die einem anderen erlaubten Gesamt-Schaltzustand der Inverterstufe (2) zugeordnet ist, um zumindest vier Bit unterscheidet,
- und die zentrale Regeleinheit (6) zur Ansteuerung eines ausgewählten Gesamt-Schaltzustandes die ihm zugeordnete Sendebitfolge (9) an die jeweilige Inverterstufe (2) übermittelt, und die übermittelte Sendebitfolge (9) von der Inverterstufe (2) als zumindest eine Empfangsbitfolge (10) empfangen und einer Schaltzustandsbitfolge (8) zugeordnet wird,
- wobei die Sendebitfolge (9) mit einer in Bit pro Sekunde gemessenen Übertragungsrate übertragen wird, deren Verhältnis zu der in Hertz gemessenen Schaltfrequenz der Schaltelemente (3) zumindest 1000 beträgt,
- und eine Änderung des Gesamt-Schaltzustandes einer Inverterstufe (2) nur dann vorgenommen wird, wenn die in der jeweiligen Inverterstufe (2) empfangene Empfangsbitfolge (10) einer Bitfolge aus einer vorgegebenen Bitfolgengruppe (11) entspricht, die aus Sendebitfolgen (9), die jeweils einem erlaubten Gesamt-Schaltzustand der Inverterstufe (2) eindeutig zugeordnet sind, und aus Bitfolgen, die sich von diesen Sendebitfolgen (9) höchstens um ein Bit unterscheiden, gebildet wird.

2. Verfahren nach Anspruch 1, wobei die Übertragungsrate der Sendebitfolgen (9) zumindest 600 MB/s beträgt.

3. Verfahren nach Anspruch 1 oder 2, wobei die Sendebitfolgen (9) gleich viele Nullen wie Einser aufweisen.

4. Verfahren nach einem der vorhergehenden Ansprüche, wobei die zentrale Regeleinheit (6) zur Ansteuerung eines ausgewählten Gesamt-Schaltzustandes die ihm zugeordnete Sendebitfolge (9) zweifach aufeinanderfolgend an die jeweilige Inverterstufe (2) übermittelt, und eine Änderung des Gesamt-Schaltzustandes nur dann vorgenommen wird, wenn von der jeweiligen Inverterstufe (2) zwei Empfangsbitfolgen (10), die demselben ausgewählten Gesamt-Schaltzustand zugeordnet sind, empfangen werden.

5. Verfahren nach einem der vorhergehenden Ansprüche, wobei die zentrale Regeleinheit (6) vor und nach der Übertragung von Sendebitfolgen (9) zumindest eine Start-, Synchronisations- und/oder Stop-Bitfolge (13) überträgt, wobei sich die Start-, Synchronisations- und/oder Stop-Bitfolge (13) von einer beliebigen Aneinanderreihung zweier aufeinander folgender Sendebitfolgen (9) um zumindest ein Bit unterscheidet.

6. Verfahren nach einem der vorhergehenden Ansprüche, wobei bei einer als bidirektionalen Übertragungsstrecke ausgeführten, seriellen Übertragungsstrecke (5) von der Inverterstufe (2) eine Anforderung zur erneuten Übermittlung einer Sendebitfolge (9) an die zentrale Regeleinheit (6) erfolgt, falls eine zuvor von der jeweiligen Inverterstufe (2) empfangene Empfangsbitfolge (10) keiner Bitfolge aus der vorgegebenen Bitfolgengruppe (11, 12) entspricht.

## Claims

1. A method for actuating the switching elements (3) of three-phase inverter stages (2) switched in parallel, wherein each of the six switching elements (3) of an inverter stage (2) has two switching states (0, 1) each, and the total switching state of an inverter stage (2) is determined by a combination of the switching states (0, 1) of its switching elements (3), which combination can be represented as a switching state bit sequence (8) of six bits, and by switching the switching elements (3) with a switching frequency a time sequence of total switching states of the inverter stage (2) selected from a number of permitted total switching states is realized for forming a desired output current of the inverter stage (2), wherein
- the actuation of the switching elements (3) of an inverter stage (2) occurs via a central control unit (6) connected to the respective inverter stage (2) via a serial data transmission path (5),
- wherein the central control unit (6) unambiguously assigns a transmission bit sequence (9) consisting of ten bits to each switching state bit sequence (8) which corresponds to a permitted total switching state of the inverter stages (2), wherein each transmission bit sequence (9), which is assigned to a permitted total switching state of the inverter stage (2), differs by at least four bits from another transmission bit sequence (9) which is assigned to another permitted total switching state of the inverter stage (2),
- and the central control unit (6) for actuating a selected total switching state transmits the transmission bit sequence (9) assigned to said selected total switching state to the respective inverter stage (2), and the transmitted transmission bit sequence (9) is received by the inverter stage (2) as at least one receiving bit sequence (10) and assigned to a switching state bit sequence (8),
- wherein the transmission bit sequence (9) is transmitted at a transmission rate measured in bits per second, whose ratio to the switching frequency of the switching elements (3) measured in Hertz is at least 1000,
- and a change in the total switching state of an inverter stage (2) is only carried out when the receiving bit sequence (10) received in the respective inverter stage (2) corresponds to a bit sequence from a predetermined bit sequence group (11) which is formed by transmission bit sequences (9) which are respectively unambiguously assigned to a permitted total switching state of the inverter stage (2) and by bit sequences which differ from said transmission bit sequences (9) by not more than one bit.

2. A method according to claim 1, wherein the transmission rate of the transmission bit sequences (9) is at least 600 MB/s.

3. A method according to claim 1 or 2, wherein the transmission bit sequences (9) have the same number of zeros as ones.

4. A method according to one of the preceding claims, wherein the central control unit (6) for actuating a selected total switching state transmits the transmission bit sequence (9) assigned thereto twice successively to the respective inverter stage (2), and a change in the total switching state is only carried out when two receiving bit sequences (10) which are assigned to the same selected total switching state are received by the respective inverter stage (2).

5. A method according to one of the preceding claims, wherein the central control unit (6) transmits at least one start, synchronisation and/or stop bit sequence (13) before and after the transmission of transmission bit sequences (9), wherein the start, synchronisation and/or stop bit sequence (13) differs from a random succession of two successive transmission bit sequences (9) by at least one bit.

6. A method according to one of the preceding claims, wherein a demand for the renewed transmission of a transmission bit sequence (9) to the central control unit (6) can be made by the inverter stage (2) in a serial transmission path (5) formed as a bidirectional transmission path if a receiving bit sequence (10) previously received by the respective inverter stage (2) does not correspond to any bit sequence from the predetermined bit sequence group (11, 12).

## Revendications

1. Procédé de commande des éléments de commutation (3) d'étages onduleurs triphasés (2) montés en parallèle, chacun des six éléments de commutation (3) d'un étage onduleur (2) présentant deux états de commutation (0, 1) et l'état de commutation global d'un étage onduleur (2) étant défini par une combinaison des états de commutation (0, 1) de ses éléments de commutation (3) qui peut être représentée comme une séquence de bits d'état de commutation (8) de six bits, et, par commutation des éléments de commutation (3) à une fréquence de commutation, une séquence temporelle d'états de commutation globaux de l'étage onduleur (2), sélectionnée parmi un certain nombre d'états de commutation globaux autorisés, est réalisée pour former un courant de sortie souhaité de l'étage onduleur (2), dans lequel
- les éléments de commutation (3) d'un étage onduleur (2) sont commandés par une unité centrale de régulation (6) qui est reliée à l'étage onduleur concerné (2) par une ligne de transmission de données série (5),
- l'unité centrale de régulation (6) associe de manière univoque une séquence de bits d'émission (9) composée de dix bits à chaque séquence de bits d'état de commutation (8) qui correspond à un état de commutation global autorisé des étages onduleurs (2), chaque séquence de bits d'émission (9) qui est associée à un état de commutation global autorisé de l'étage onduleur (2) différant d'au moins quatre bits d'une autre séquence de bits d'émission (9) qui est associée à un autre état de commutation global autorisé de l'étage onduleur (2),
- et, pour commander un état de commutation global sélectionné, l'unité centrale de régulation (6) transmet la séquence de bits d'émission (9) qui lui est associée à l'étage onduleur concerné (2) et la séquence de bits d'émission (9) transmise est reçue par l'étage onduleur (2) au moins comme une séquence de bits de réception (10) et est associée à une séquence de bits d'état de commutation (8),
- la séquence de bits d'émission (9) est transmise à une vitesse de transmission qui est mesurée en bits par seconde et dont le rapport à la fréquence de commutation, mesurée en hertz, des éléments de commutation (3) est d'au moins 1000,
- et un changement de l'état de commutation global d'un étage onduleur (2) n'est effectué que si la séquence de bits de réception (10) reçue dans l'étage onduleur concerné (2) correspond à une séquence de bits d'un groupe de séquences de bits prédéfini (11) qui est formé de séquences de bits d'émission (9) qui sont chacune associées de manière univoque à un état de commutation global autorisé de l'étage onduleur (2) et de séquences de bits qui diffèrent de ces séquences de bits d'émission (9) au maximum d'un bit.

2. Procédé selon la revendication 1, dans lequel la vitesse de transmission des séquences de bits d'émission (9) est d'au moins 600 Mb/s.

3. Procédé selon la revendication 1 ou 2, dans lequel les séquences de bits d'émission (9) présentent autant de zéros que de uns.

4. Procédé selon l'une des revendications précédentes, dans lequel, pour commander un état de commutation global sélectionné, l'unité centrale de régulation (6) transmet la séquence de bits d'émission (9) qui lui est associée deux fois successivement à l'étage onduleur concerné (2), et un changement de l'état de commutation global n'est effectué que si deux séquences de bits de réception (10) qui sont associées au même état de commutation global sélectionné sont reçues par l'étage onduleur concerné (2).

5. Procédé selon l'une des revendications précédentes, dans lequel l'unité centrale de régulation (6) transmet au moins une séquence de bits de démarrage, de synchronisation et/ou d'arrêt (13) avant et après la transmission de séquences de bits d'émission (9), la séquence de bits de démarrage, de synchronisation et/ou d'arrêt (13) différant d'au moins un bit de toute juxtaposition de deux séquences de bits d'émission successives (9).

6. Procédé selon l'une des revendications précédentes, dans lequel, dans le cas d'une ligne de transmission série (5) réalisée sous la forme d'une ligne de transmission bidirectionnelle, l'étage onduleur (2) demande une retransmission d'une séquence de bits d'émission (9) à l'unité centrale de régulation (6) si une séquence de bits de réception (10) reçue précédemment par l'étage onduleur concerné (2) ne correspond à aucune séquence de bits du groupe de séquences de bits prédéfini (11, 12).
